# EUROPEAN PATENT SPECIFICATION

(11) **EP 4 668 679 B1**
(45) Date of publication and mention of the grant of the patent: **19.08.2026**
(21) Application number: 24182781.5
(22) Date of filing: 18.06.2024
(51) Int. Cl.: H04L 12/40, H05B 47/18, H04L 41/06, H05B 45/10, H05B 45/30, H05B 45/50, B60Q 1/30, B60Q 11/00

(54) **SYSTEM AND METHOD FOR CONTROLLING VEHICLE LAMPS**
SYSTEM UND VERFAHREN ZUR STEUERUNG VON FAHRZEUGLAMPEN
SYSTÈME ET PROCÉDÉ DE COMMANDE DE LAMPES DE VÉHICULE

(43) Date of publication of application: 24.12.2025
(73) Proprietor: Hella Autotechnik Nova s.r.o., 78985 Mohelnice (CZ)
(72) Inventor: Stuchlik, Ales, 739 41 Palkovice (CZ)
(74) Representative: Behr-Wenning, Gregor

(56) References cited:
- US-A1- 2016 297 351
- US-A1- 2017 359 869
- US-A1- 2021 039 550

## Description

### Technical field

The present invention relates to communication between lamps in a vehicle, especially where several lamps together form a multi-part lamp, and to handling failures of such communication.

### Background of the Invention

Two-part vehicle lamps, where the parts, which are basically separate lamps, can be mechanically unconnected, but they form a single multi-part lamp with shared illumination function(s), are known in the art. A typical case is an automobile taillight having one part mounted to a trunk lid and the other part to the automobile's body. The lid rotates with respect to the body when opened which is why the two parts are independently mounted and are not mechanically connected. Both parts however need to be synchronized, e.g., the same illumination functions need to be on and off at the same times, so there needs to be communication between the lamps. Another example of a two-part lamp can be a headlight which is partially incorporated in a front grille of the vehicle. Besides turn signals, other examples of illumination functions which are often divided between multiple parts of a lamp include daytime running lights, welcome lights or brake lights.

Typically, there is a main control unit for such a two-part lamp, and several secondary control units, e.g., for each illumination module in each of the lamps forming a part of the two-part lamp. The control units are connected to a parallel communication bus, such as CAN or LIN, such that the main control unit can give instructions to the secondary control units, which then control individual light sources accordingly, and the main control unit can also check on the secondary control units, to see if they are operational. Parallel communication buses enable efficient communication but have the disadvantage that if a part of the bus fails, the whole communication can be lost. For example, a short circuit anywhere in the bus can keep voltage in the bus at zero, so the voltage cannot represent any meaningful signal and there is no communication. For two-part lamps attached at different vehicle components, especially if the components are mutually movable (such as a taillight located partially on vehicle body and partially on trunk lid), wires forming the bus can often be damaged by repeated pressing or bending, and short circuits or other defects can occur.

Many suitable secondary control units for controlling light sources in vehicle lamps are known in the art and available on the market. For example, they can be marketed as LED Matrix Managers for Automotive Headlight Systems, such as TPS92661-Q1 from Texas Instruments^{®}. These known units have the advantage that they are prepared for a loss of communication and can be set with predetermined values for each of their outputs, which are used when the unit stops receiving instructions from a main control unit for some predetermined time interval. A lamp manufacturer can thus choose the values for each output of the unit (the same 1/0 value for all outputs or different values for different outputs) and can choose the length of the time interval. If communication is lost, the control unit turns the light sources it controls on or off depending on the preset values. This can ensure, e.g., that a turn signal or brake light will not be kept constantly on after a communication failure, or that a daytime running light will be kept on after a communication failure.

All the control units connected to the bus, where a failure occurred, are however left without communication and their light sources are kept on the predetermined values. The whole multi-part lamp or all the lamps communicating via a common bus are thus left in a basic illumination state preset by the output values of the secondary control units, even if only a part of the bus is damaged. It would be therefore advantageous to improve control systems for vehicle lights to decrease impact of communication bus defects.

US 2016/297351 A1 represents prior art relevant with regard to what is disclosed herewith.

### Summary of the Invention

The invention is defined by the appended claims.

The shortcomings of the solutions known in the prior art are to some extent eliminated by a system for controlling vehicle lamps comprising a first lamp, a second lamp, a bus for parallel communication, a main control unit and at least two secondary control units. The main control unit controls the whole system, i.e., it controls illumination of the first lamp and the second lamp via the secondary control units. The at least two secondary control units receive instructions from the main control unit and set their respective light sources accordingly. The first secondary control unit is for controlling the illumination in the first lamp and the second secondary control unit is for the second lamp.

The parallel communication bus transfers data between components connected to it to enable communication between these components, i.e., between the control units within the system. The main control unit and the secondary control units are thus connected to the bus in parallel. Any sent instructions thus reach all the secondary control units, but only the one it was intended for reacts to any given instruction. The bus has two sections, wherein the main control unit and the first secondary control unit are connected to a first section and the second secondary control unit is connected to a second section.

Each secondary control unit has an input connected to the bus and multiple outputs for switching light sources on and off. The input thus serves for receiving instructions from the main control unit. The secondary control units can also have a communication output connected to the bus so that they can send data to the main control unit, e.g., in order to periodically confirm to the main control unit that they are operational and that the communication works properly.

Each secondary control unit is configured (e.g., by having appropriate program instructions stored therein) for detecting a failure of communication in the bus and setting each of its outputs to a predefined value if the failure is detected. Such secondary control units, e.g., LED drivers or LED managers, are known to skilled persons. A skilled person can thus provide each secondary control unit with these predetermined values for each output, and when the secondary control unit detects a failure of communication, e.g., if it does not receive any instruction or request for operability confirmation for some predetermined time, the predetermined values are used to set the outputs to turn their respective light sources on or off.

The first secondary control unit, which can in various embodiment be any of the secondary control units which are a part of the system, is provided with a switch placed into the bus between the first section and the second section to communicatively connect the sections when closed and disconnect the sections when opened. E.g., at least one cable or trace which transfers signals along the bus is divided, and connected via the switch such that it depends on the state of the switch whether it can transfer signal. Since the communication over the bus is provided as parallel, the opening of the switch leaves all components connected to the first section communicatively connected to each other, while all the components connected to the second section, as well as any potential defects in the second section, are insulated from the first section with the main control unit.

The switch has a control terminal connected to one output of the first secondary control unit, and the predefined value which is set on this output if the failure of communication in the bus is detected corresponds to opening the switch. In other words, if the communication fails, the first secondary control unit opens the switch and thus disconnects the second section of the bus from the first section. If the failure of communication was caused by anything in the second section or connected to the second section, such as when wires forming a part of the second section have their insulation worn and get short-circuited or unintentionally grounded, the opening of the switch allows the communication in the first section to be reestablished and the first lamp can return to its fully functional state where it receives instructions from the main control unit.

The switch can be any type of electrical switch, e.g., a transistor, such as MOSFET, a relay, etc. The one output of the first secondary control unit, which is connected to the control terminal of the switch, can be any of its outputs. The first secondary control unit does not need any modifications, since the ability to set outputs to certain values can be provided during its standard manufacture. During creation of the system, one of the outputs, e.g., a last of its outputs, is selected, connected to the switch control terminal, and its predetermined value is set for opening the switch. The first secondary control unit is provided with the switch, but the switch does not have to be located near the unit or the chip / integrated circuit forming its control hardware. I.e., the part of the bus, where the switch is located, can even be several centimeters or tens of centimeters away from the chip.

The rest of the outputs of the first secondary control unit can be used for controlling light sources, e.g., LEDs, as usual. E.g., the first secondary control unit can be used to control some illumination function or module, such as turn signals or break lights, of the first lamp. The secondary control units are preferably located in the lamps they control. Each lamp can have multiple secondary control units, which are preferably all connected to the same section of the bus.

The system for controlling vehicle lamps can be a part of a multi-part vehicle lamp, and/or it can control several distinct lamps. For example, the first lamp can be a headlight, and the second lamp can be an illuminated front grille or a part thereof, or the first and second lamps can be parts of one headlight or taillight, or the first lamp can be one headlight/taillight and the second lamp is the other headlight/taillight etc. The main control unit can be any computational or processing unit usable for controlling lights. It is preferably connected to a control unit of the whole vehicle to receive its instructions for operating the respective lamps.

The bus can be any communication system or component which can be used for transferring data between various control units. A LIN or CAN bus are examples of suitable bus types, but other communication technologies, such as ethernet communication can also be used.

The invention thus utilizes the known functionality of secondary control units (i.e., light source drivers or managers) to set all outputs connected to individual light sources to certain predefined value in case of failure of communication, in a different way. It utilizes one of these outputs to control not a light source, but a switch, which can be used to disconnect a damaged part of the bus to keep the rest operational. The invention is especially useful for communication between lamps which are mechanically separated and/or carried by different parts of the vehicle. For example, a part of a taillight can be attached to the vehicle's body, and a different part can be attached to a trunk lid, or one lamp can be a headlight and other lamp can be an illuminated grille. If one of the lamps is damaged, which can occur e.g., during a frontal collision which can easily damage the grille, during rear-end collision which can damage the trunk lid, etc., this damage can disrupt the communication, and cutting the damaged part off by the switch then allows the undamaged lamp to function and communicate via the first section of the bus.

For multi-part lamps located in different, mutually moveable vehicle components, at least a part of the bus is often realized as a cable passing between the components, e.g., next to a hinge. Such a cable is thus often twisted, squeezed and/or bent and can thus get damaged. For example, insulations of several cables can get worn out over time, the conductive cores of the cables can touch each other, and the communication is thus disrupted. Depending on which cables get damaged, the disruption can have the form of a grounding of the cable, so that there cannot be any non-zero voltage which could carry any information, the form or connecting the cable to another communication cable, so that multiple different communication signals get mixed, it can have the form of disruption by an electrical field caused by some near device etc.

The present invention allows separation of the bus, to reestablish communication in the first section, and it allows the main control unit to find out, that there is a localized damage, so further steps can be taken, as described further below.

If the loss of communication is indeed repaired by the opening of the switch, the one output of the first secondary control unit can be set to a different value, to close the switch, which can be initiated by the main control unit. The damage in the second section of the bus could be temporary, e.g., caused by some larger vibrations, and the control system can then return to its normal operation over the whole bus. The main unit can then keep count of the communication failures, in case it happens repeatedly, and inform the driver accordingly. The closing of the switch can also cause an instantaneous failure of the communication again, e.g., if a bus wire is in constant contact with a ground wire. The main control unit can again keep count of such repeated failures, and after a certain predetermined number of failures, it can decide to keep the one output of the first secondary control unit at a constant value for keeping the switch open. At the same time, it can also inform the driver that the second lamp is not operational or will be set to a basic function given by the predetermined values of the outputs of the second secondary control unit. The main control unit can also shut the second lamp down completely, e.g., by cutting its power supply.

The present invention thus can increase safety of vehicles by keeping at least some lamps operational even in situation where they would not be according to the state of the art.

The main control unit can be configured for detecting a failure of communication in the first section, detecting reestablishment of communication in the first section after the switch is opened, and disconnecting the second lamp from the bus and/or from power after a predetermined number of failures and reestablishments of communication in the first section. In other words, the main control unit can learn, after a certain number of failures, that reconnecting the second section to the first section is better avoided, because it causes failure again and again. It can then simply disconnect the second section and its lamps or control units from the power source, it can disconnect the second section until a repair is provided etc.

The configuration for detecting a failure of communication in the bus can include configuration for detecting that voltage remained in a predetermined range over a predetermined time period. This range can e.g., imply that there is a short circuit in the bus if voltage remains substantially zero for too long, e.g., it does not exceed 1 V for 50 ms. Similarly, the range can be around the maximum voltage in the bus, e.g., 5 or 12 V. Preferably, both ranges, one including zero and one including the max voltage, are used in this configuration. The range can also be only predetermined by its size, not its absolute values, e.g., the secondary control units determine the failure, if the voltage has not changed by more than 2 V for more than 60 ms.

The system according to the invention is the most advantageous when the first lamp and the second lamp are moveable with respect to each other, wherein the bus includes a cable connection between the mutually movable lamps. The cable connection is then repeatedly strained and thus prone to damage which can cause failures of communication. For example, first lamp and the second lamp can form a two-part taillight, two-part headlight, two-part side lamp or two-part interior lamp. Other applications to non-movable lamps are however also possible and useful.

The shortcomings of the solutions known in the prior art are to some extent also eliminated by a method for controlling communication between vehicle lamps by a system having a main control unit and at least two secondary control units connected in parallel to a bus, e.g., by a system according to the invention as described above. The method comprises the steps of:
- Carrying communication via the bus between the main control unit and the secondary control units. This step corresponds to a normal operation, where the communication includes instructions from the main control unit to a secondary control unit(s) about a desired illumination function, it includes periodical checks of functionality etc.
- Controlling light sources by outputs of the secondary control units. This steps also corresponds to normal operation, when the secondary control units respond to the instructions.
- Setting, by each secondary control unit, each of its outputs to a predefined value if a failure of the communication in the bus is detected. As described above, this step on its own is known from the state of the art, and defines how the secondary control units behave if the communication is lost and they cannot receive any new instructions.
- Disconnecting the bus between a first secondary control unit and a second secondary control unit by the first secondary control unit, wherein the first secondary control unit disconnects the bus by controlling a switch provided in the bus when one of its outputs is set to the predefined value when the failure of the communication in the bus is detected. This step thus describes the function of the switch which was in detail described above. A section of the bus is disconnected in response to the communication failure and there is thus a chance for reestablishment of the communication.

The method can further comprise the steps of:
- Detecting, by the main control unit, failures of the communication in the bus and reestablishments of the communication in the bus after the bus is disconnected. As mentioned above, the reestablishment can be initiated by the main control unit, when it sets the switch-controlling output of the first secondary control unit to close the switch.
- Disconnecting, by the main control unit, a lamp which comprises the second secondary control unit from power and/or from the bus after a predetermined number of failures and reestablishments of communication in the bus.

The failure of communication in the bus can detected if voltage in the bus remains in a predetermined range over a predetermined time period.

The failure of communication in the bus can also be detected if messages comprised in the communication, i.e., messages received by the control units over the bus, are considered undefined and/or unreadable by the main control unit for a predetermined time period.

Each bus has a defined structure of messages, i.e., length, type of encoding etc., and if messages do not conform to this expected structure, they are considered unreadable/undefined. The present invention can use this aspect to detect the failure of communication, by the secondary control units and/or by the main control unit. The predetermined time period, e.g., 50-150 ms, can be chosen by one skilled in the art.

The system can in some variants of the invention have its bus divided in more than two sections. A third section is separated from the second section by a second switch, which is controlled by an output of one of the secondary control units of the second lamp connected to the second section, and so on for any further sections. Each section can thus have one or more lamps connected thereto. The farther a secondary control unit controlling some switch is from the main control unit, wherein the distance is measured by number of bus sections between the switch and the main control unit, the shorter its switch-opening interval. There is thus a cascade of switches, and the system opens them one after another, starting with the farthest one, to see if the communication will be reestablished by closing the switch, and if not, a closer switch is opened etc. The difference between the opening times (i.e., how long it takes to the respective secondary control unit to detect communication failure and use the predefines output values) between different switches is chosen large enough to enable the secondary control units to detect return of the communication, or more precisely to prevent other secondary control units from detecting a loss of communication, so that no more switches are opened if opening of some switch cut-off the cause of the failure.

### Description of drawings

A summary of the invention is further described by means of exemplary embodiments thereof, which are described with reference to the accompanying drawings, in which:
- Fig 1.: Shows a schematic diagram of a first embodiment of the system for controlling vehicle lamps according to the invention, wherein the system includes two lamps, each with one secondary control unit, and a communication bus is divided by a switch between the two secondary control units.
- Fig 2.: Shows a rear view of an automobile with two-part taillights, wherein each of the taillights is formed by two lamps, as depicted by fig. 1.
- Fig 3.: Schematically shows one of the taillights from fig. 2 and its main components.
- Fig 4.: Schematically shows the diagram from fig. 1 in a state corresponding to a normal operation where each secondary control unit controls its LEDs according to instructions it receives via the bus.
- Fig 5.: Schematically shows the diagram from fig. 4 in a state where a short circuit occurred in a second section of the bus, which completely disturbs all communication via the bus and no instruction can thus be received.
- Fig 6.: Schematically shows the diagram from fig. 5 after the switch was automatically opened in response to the loos of communication caused by the short circuit, wherein one of the lamps regained communication thanks to the damaged part of the bus being cut off by the switch.
- Fig 7.: Shows a schematic diagram of a second embodiment of the system, where there are three lamps, each with multiple secondary control units, and the bus is divided by switches into three sections, each connected to one of the lamps.
- Fig 8.: Shows a flowchart of a method for controlling vehicle lamps which can be implemented by the system according to the first embodiment.
- Fig 9.: Shows a schematical graph of a signal transferred via the bus from the system from fig. 1, wherein a loss of communication occurs at time t0, which is detected at time t1, and communication is reestablished by opening the switch at time t2.

### Exemplary Embodiments of the Invention

The invention will be further described by means of exemplary embodiments with reference to the respective drawings.

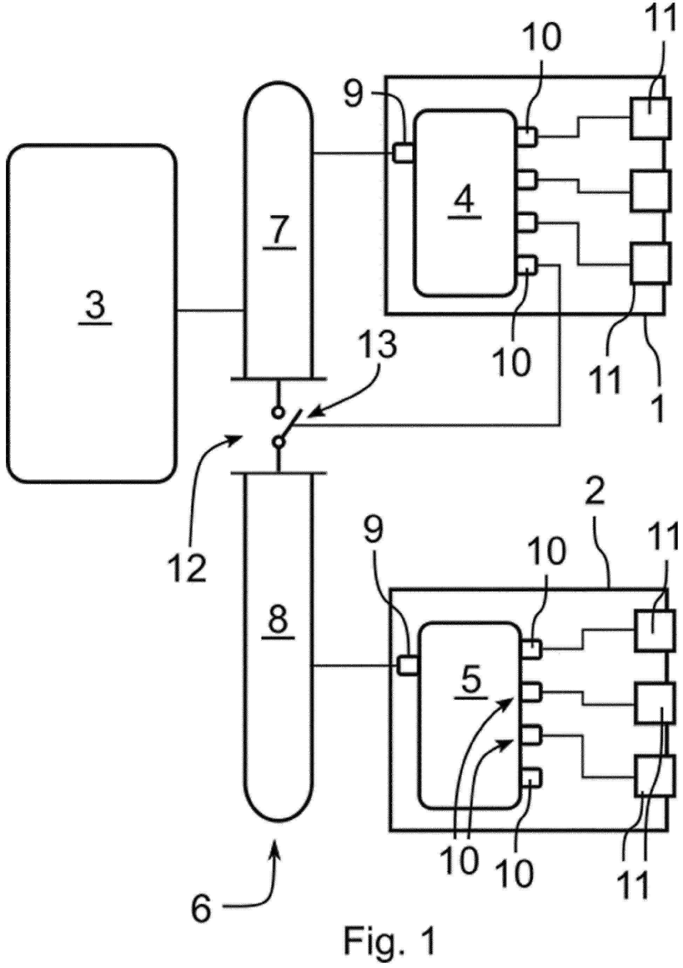

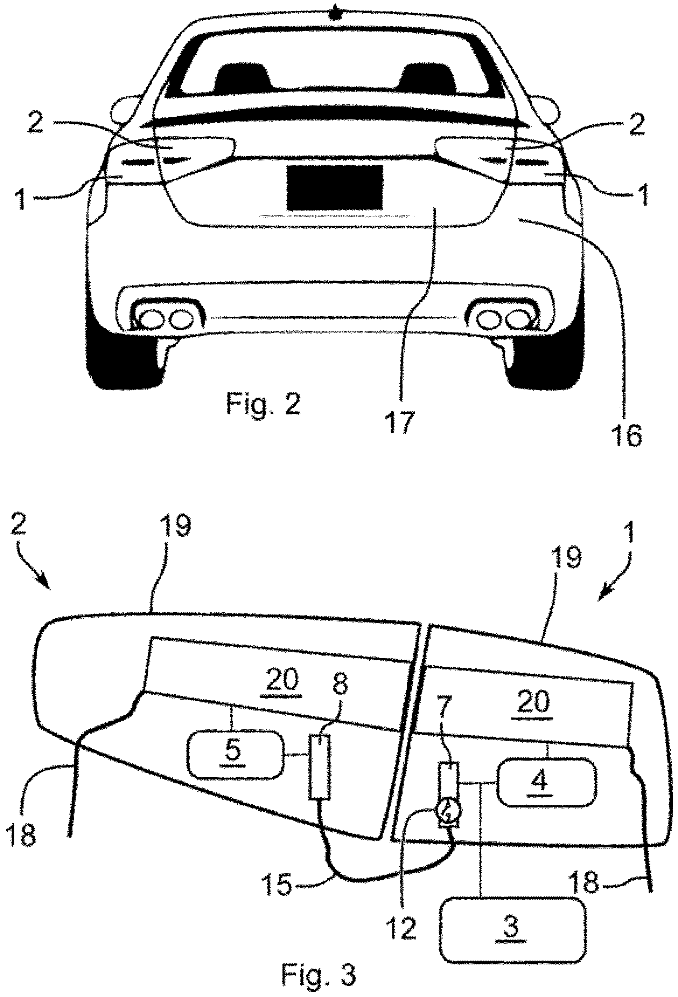

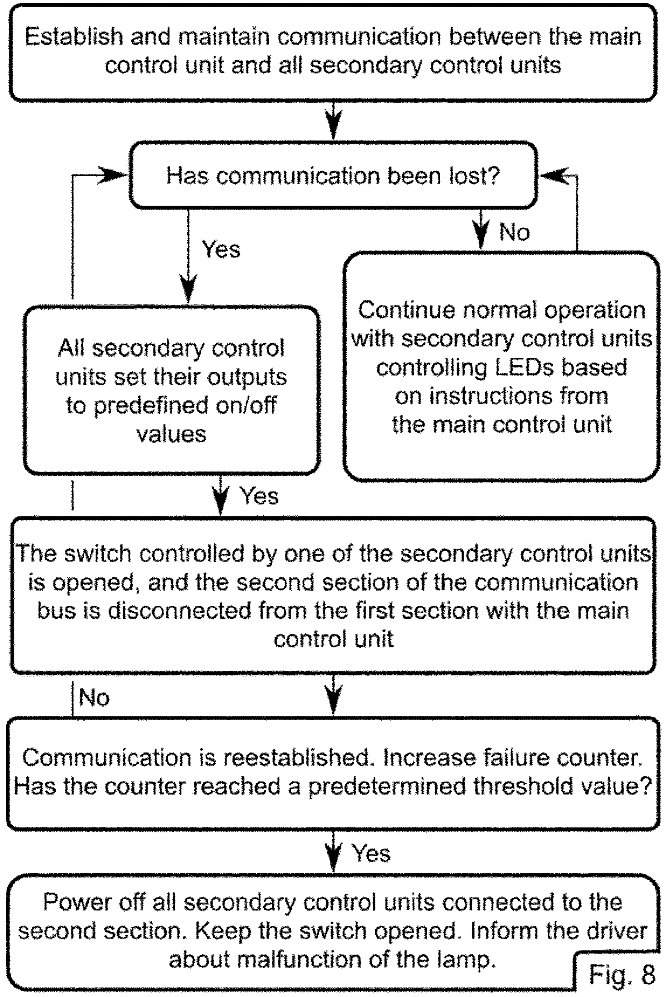

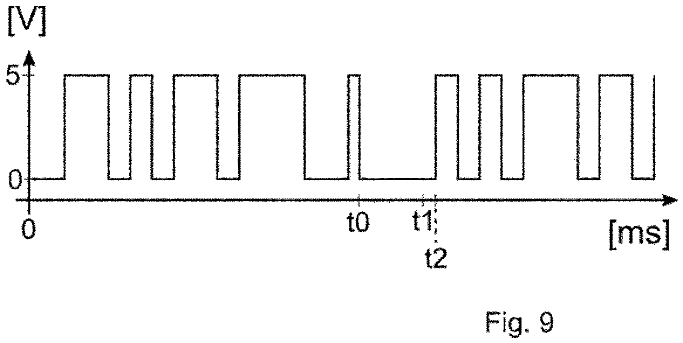

A first embodiment of the invention is shown in figs. 1 to 6 and its function is shown by figs. 8 and 9. System for controlling vehicle lights in this embodiment comprises two lamps, a main control unit 3 and a bus 6. Main electronical components and arrangement of the system are shown in fig. 1. The lamps together form a two-part taillight, as shown in figs. 2 and 3, wherein a first lamp 1 is mounted to vehicle body 16 and is connected to a first section 7 of the bus 6, which is also connected to the main control unit 3. A second lamp 2 is mounted to a trunk lid 17 and is connected to a second section 8 of the bus 6. Each lamp has multiple illumination modules 20, one of which is shown in fig. 3 and serves as a turn signal. Other modules include tail light module, fog light module and brake light module. As can be seen, the turn signal modules form a common light output section of the two-part taillight, and a communication over the bus 6 is thus important for synchronization of the two modules during their operation.

The main control unit 3 is a standard electronic control unit used for controlling vehicle lights in the state of the art. It is connected to a control unit of the whole vehicle, which determines which light function should be in what state. The first lamp 1 comprises a first secondary control unit 4 which is communicatively connected to the bus 6 via its input 9, connected by a power cable 18 to the vehicle's battery and has a number of outputs 10 intended for turning individual LED light sources 11 on and off as instructed by the main control unit 3. The first lamp 1 further comprises LED light sources 11 for providing all its illumination functions, and it comprises other standard lamp components such as a casing 19, wiring, heat sinks, sensors, optical elements etc. One output 10 of the first secondary control unit 4 is not connected to any LED but is connected to a control terminal 13 of a switch 12, which will be described further below.

The second lamp 2 has analogous components to the first one. It comprises a second secondary control unit 5, which has a number of outputs 10 corresponding to a number of LEDs the second lamp 2 has for its illumination functions. This lamp also has any or all of the standard lamp components as mentioned above. The second secondary control unit 5 has all its outputs 10 connected to LED light sources 11 and can also send and receive communication over the bus 6.

The bus 6 is a CAN bus 6 in this embodiment, and it connects all the control units in parallel so that any data sent over the bus 6 reach all the control units. This also means that a failure of a part of the bus 6, or potentially of one control unit, can cause all communication over the bus 6 to go down. The two sections of the bus 6 are separated by the switch 12 which is installed in one of the multiple communication wires forming the bus 6. Between the lamps, the wires are formed into a cable connection 15 extending along the vehicle body 16, around a hinge of the trunk lid 17, and along the inner lining of the trunk lid 17, to connect both lamps. The part of the cable around the hinge is the most likely source of damage to the bus 6.

When the switch 12, which is a MOSFET in this embodiment, is closed, it conductively connects the first section 7 of the bus 6 to the second section 8, and the bus 6 thus operates as usual. When the switch 12 is opened, i.e., the transistor does not allow any current to pass between the sections, there is no communication between the sections and the voltage in their cables is independent of each other. Each section thus basically functions as a separate bus 6. If there is a failure in some component which affects all the parallelly connected components, the switch 12 thus isolates one group of components (along the first section 7) from the other group (along the second section 8) and thus limits the failure to only a part of the bus 6.

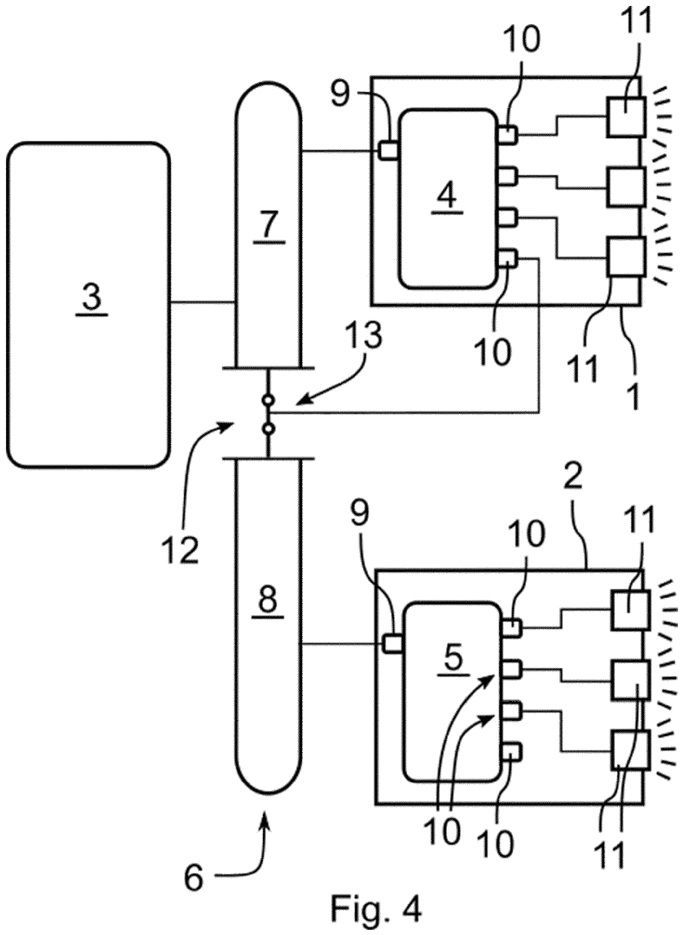

If this failure is caused in the first section 7, the communication is still basically lost even in the second section 8 because there is no way for the main control unit 3 to send data to the second section 8. However, if the failure occurred in the second section 8 of the bus 6, opening the switch 12 allows the first section 7 of the bus 6 to keep its communication up and all the components connected thereto can thus receive instructions from the main control unit 3. The three main states of the system are schematically shown in figs. 4-6. Fig. 9 shows a waveform of voltage in the first section 7 of the bus 6 over a certain time period. Changes in the voltage between 0 and 5 V carry information (ones and zeros), and a longer period of constant voltage means there is no communication. In fig. 4, there is no failure, the switch 12 is closed, i.e., the bus 6 functions as if there was no switch 12, and both lamps are fully operational. In fig. 9, this state occurs until time t0.

The full operability in these figures is shown as light being emitted by all the light sources 11 for clarity. However, in reality, a full operability means that the individual light sources 11 and secondary control units can receive instructions from the main control unit 3 and can be set as needed, i.e., some light sources 11 can be, and usually some are, turned off, and the operability means that the main control unit 3 has the ability to change the state of the light sources 11 as needed.

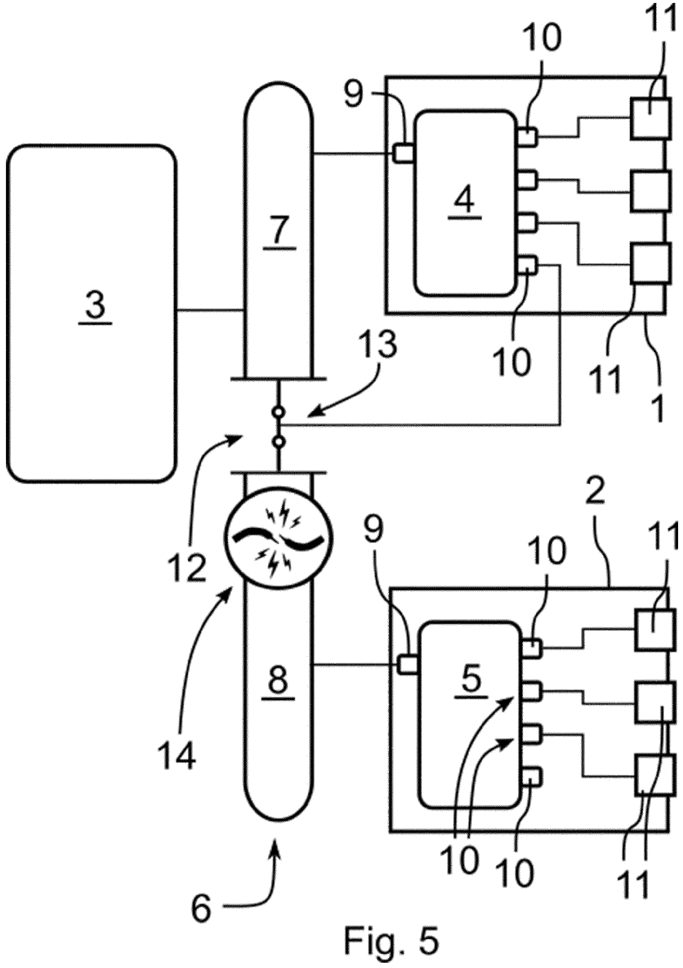

In fig. 5, there is a short circuit in the second section 8 of the bus 6. Two wires of the cable connection 15 have had their insulation worn down and their conductive cores are pushed against each other. Voltage in the touching wires is constantly zero regardless of any communication attempt by the main control unit 3. The switch 12 is still closed, so the whole bus 6 is without communication. In fig. 9, this state corresponds to a time period from t0 to t1. This period in this embodiment has length of 50 ms - if there is no change in voltage for this long at the input 9 of a secondary control unit, the secondary control unit considers its communication over the bus 6 lost.

Both secondary control units are programmed to detect this loss of communication and to set all their outputs 10 to predefined values after the communication is lost. These values are set into the unit during assembly of the system and are chosen to maintain the safest state of all illumination function, e.g., tail light function is on, turn signal is off. The one output 10 of the first secondary control unit 4, which is connected to the control terminal 13 of the switch 12, has a predefined value corresponding to opening the switch 12. A loss of communication thus automatically makes the first secondary control unit 4 open the switch 12 and thus separate the bus 6 sections.

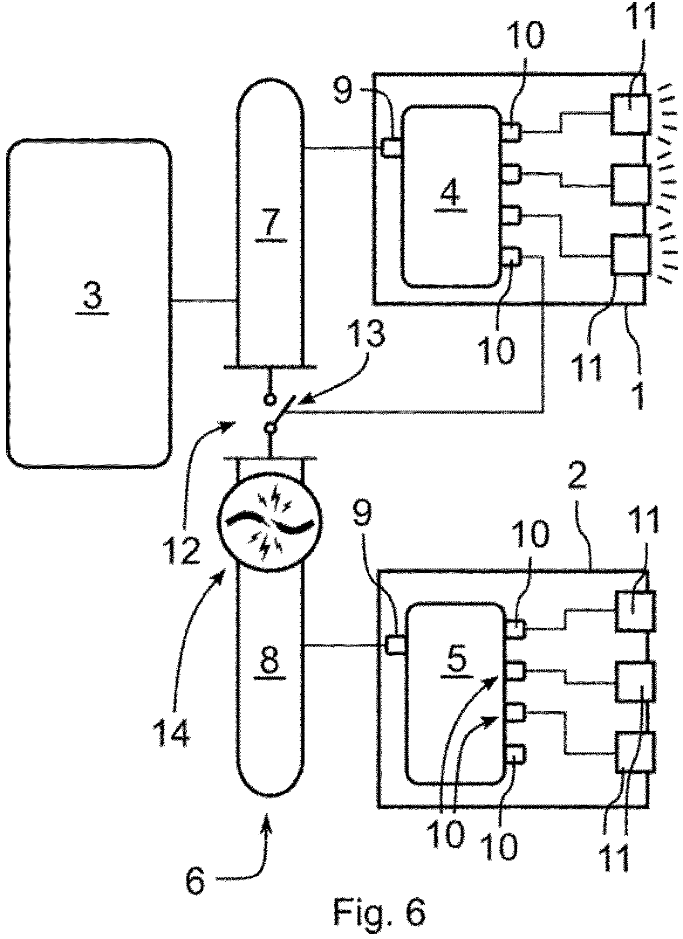

At time t1, the secondary control units thus detect the loss of communication and act accordingly. At time t2, the switch 12 is thus opened and the short circuited second section 8 of the bus 6 is cut off from the first section 7. After time t2, the voltage in the first section 7 can thus gain nonzero values again and data can be transferred. This state is shown in fig. 6. The first lamp 1 is fully operational and communicates with the main control unit 3, while the second lamp 2 is in no-communication mode with the predefined values determining states of the light sources 11.

The main control unit 3 also detects losses in communication, in the same way as the secondary control units, and keeps count of them. After each of the first three losses of communication, it waits for a few seconds and then lets the first secondary control unit 4 close the switch 12. If the communication fails again, regardless of whether it is immediately or some time later, the main control unit 3 increases its counter. After the fourth loss of communication, which was solved by opening the switch 12, the main control unit 3 determines that the second section 8 is indeed damaged and will require some repair and cannot be used. It thus tells the vehicle's control unit to power off the second lamp 2 and to inform the driver, that the second lamp 2 is damaged and has been turned off. The first lamp 1 can be set into a different mode, in which it can provide sufficient illumination without the second lamp 2. The main control unit 3 also sets the one output 10 of the first secondary control unit 4 to remain at the value corresponding to the open switch 12 until the repair is done. This process is summarized by the flowchart in fig. 8.

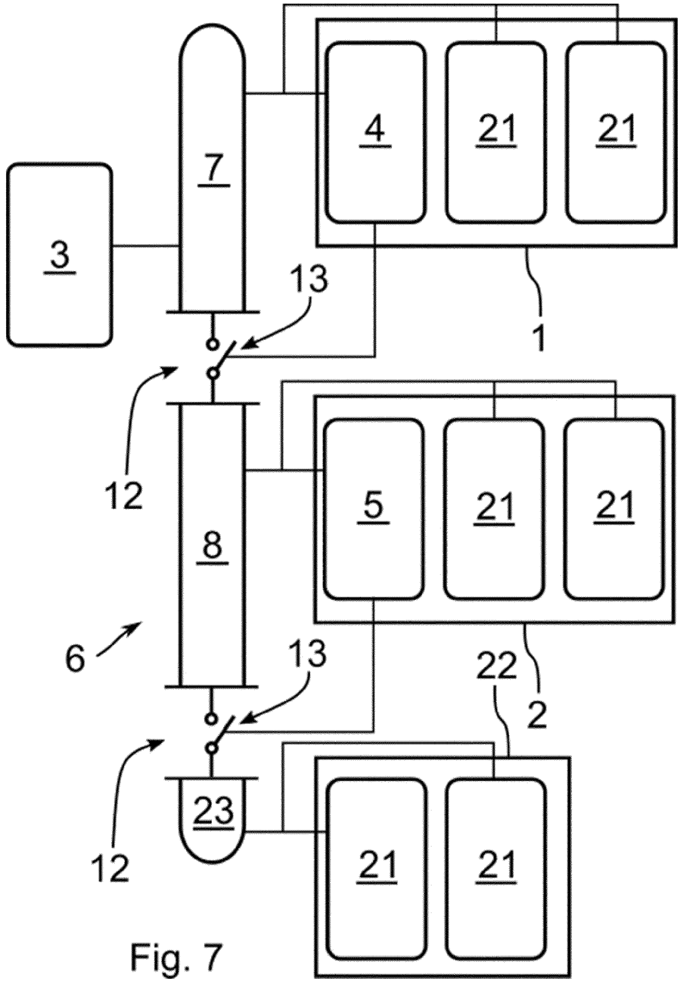

A second exemplary embodiment is shown if fig. 7. In this embodiment, the system for controlling vehicle lamps comprises three lamps - a first lamp 1, which is one automobile headlight, a second lamp 2 which is a front grille lamp, and a third lamp 22 which is an illuminated hood emblem. A second headlight can be considered a part of the first lamp 1 in some variants of this embodiment so that the whole illumination of the front of the vehicle is controlled by one system and both headlights are connected to the same bus 6 section.

The system has a main control unit 3 and a communication bus 6, as in the first embodiment. Each lamp has multiple secondary control units. In the first lamp 1, each illumination module 20, such as high beam module, turn signal module and daytime running light module, has its own secondary control unit. Individual LED light sources 11 and inputs 9 and outputs 10 of the units are present in this embodiment but are not shown in fig. 7. The second lamp 2 for grille illumination has an individual module for illumination of ribs of the grille, and has turn signal modules on both sides, which form substantially continuous turn signal illumination surface with turn signal modules of a respective headlight. The third lamp 22 has several light sources 11 for standard white illumination of the emblem and further light sources 11 for animated, color illumination of the emblem, and has two secondary control units for these two functions.

The bus 6 is divided into three sections in the second embodiment. A first section 7 is the closest to the main control unit 3 - the main control unit 3 and the first lamp 1 (i.e., all its secondary control units) are connected to this section. The second lamp 2 is communicatively connected to the second section 8 (its secondary control units are parallelly connected to the section). There is a first switch 12 between the first section 7 and the second section 8, with its control terminal 13 connected to one output 10 of a first secondary control unit 4 of the first lamp 1. The purpose and control of this switch 12 is the same as described above in the first embodiment.

A third section 23 of the bus 6 is analogously separated from the second section 8 by a second switch 12. The third section 23 is thus the farthest from the main control unit 3. Both secondary control units of the third lamp 22 are communicatively connected to the third section 23. The second switch 12 has its control terminal 13 connected to one output 10 of a second secondary control unit 5, which is in the second lamp 2. All the other secondary control units of the system are designated further secondary control units 21, and can be the same units as the first and second ones, only without controlling any of the switches 12.

The second switch 12 is controlled in the same way as the first switch 12, except that the second secondary control unit 5 detects failure of communication 30 ms sooner than the first secondary control unit 4. If a failure is caused by the third section 23 or some component connected to it, the second switch 12 is thus opened first, and the first secondary control unit 4 does not have the time to detect a failure of communication.

The bus 6 between the first section 7 and the second section 8 is a cable connection 15 located on the inside of the engine compartment of the automobile. The grille is not a movable component, so this cable connection 15 is not overly stressed. The grille can however often get damaged during frontal collisions and the first switch 12 can then allow the headlight(s) to remain in communication with the main control unit 3 despite a damaged part 14 at the second section 8 which could disrupt the communication.

The third lamp 22 is on a movable hood, and the second section 8 is thus connected to the third section 23 by a cable connection 15 passing close to a hinge of the hood. This cable connection 15 can thus wear down over time, which is why the third section 23 is the farthest from the main control unit 3. If a failure of communication is caused by the third section 23 or a component connected to it, the second switch 12 can isolate this failure and the first section 7 and the second section 8 can remain with a functional communication.

Other features of this embodiment can be the same or analogous as described above for the first embodiment.

A third embodiment of the invention is a method for controlling communication between vehicle lamps, implemented by the system according to the first embodiment. Steps of this method are schematically shown in fig. 8.

The method starts with establishing communication between the main control unit 3 and all secondary control units. This communication includes sending instructions for controlling various illumination functions of the two-part taillight, and include periodical checking on the secondary control units. If a loss (i.e., failure) of communication occurs, all secondary control units register this loss and set their outputs 10 to the predefined values. This results in opening of the switch 12 dividing the first section 7 and the second section 8 of the bus 6.

The opening of the switch 12 can result in reestablishment of the communication. The main control unit 3 keeps track of how many losses and reestablishments of communication occurred. If the number exceeds a threshold value, the second section 8 is powered off and the driver is informed, as described above in the first embodiment.

Especially construction and function of the lamps included in the system can be different in different embodiments, as can the number of lamps, of secondary control units, of switches 12 dividing the bus 6 etc. Lengths of time intervals, e.g., for detecting failure of communication, can also be different according to choices of one skilled in the art. In alternative embodiments, the second lamp 2, and/or different lamp connected to a bus 6 section which lost communication, can be kept on with illumination given by the predefined values of outputs 10, i.e., the main control unit 3 does not power off the non-communicating lamps.

Different types of vehicle illumination systems, for both exterior and interior, can be formed by lamps of the system. Unreadability of messages received by control units over the bus 6 can in some further embodiments by used to, alternatively or additionally, detect, that the communication over the bus 6 has failed.

### Reference list

- 1.: First lamp
- 2.: Second lamp
- 3.: Main control unit
- 4.: First secondary control unit
- 5.: Second secondary control unit
- 6.: Bus
- 7.: First section
- 8.: Second section
- 9.: Input
- 10.: Output
- 11.: Light source
- 12.: Switch
- 13.: Control terminal
- 14.: Damaged part
- 15.: Cable connection
- 16.: Vehicle body
- 17.: Trunk lid
- 18.: Power cable
- 19.: Casing
- 20.: Illumination module
- 21.: Further secondary control unit
- 22.: Third lamp
- 23.: Third section

## Claims

1. System for controlling vehicle lamps comprising
• a first lamp (1) and a second lamp (2),
• a main control unit (3) for controlling illumination of the first lamp (1) and the second lamp (2) via secondary control units,
• a first secondary control unit (4) for the first lamp (1) and a second secondary control unit (5) for the second lamp (2),
• a parallel communication bus (6) for communication between control units within the system, wherein
• the main control unit (3) and the secondary control units are connected to the bus (6) in parallel, wherein the bus (6) has two sections, wherein the main control unit (3) and the first secondary control unit (4) are connected to a first section (7) and the second secondary control unit (5) is connected to a second section (8), wherein
• each secondary control unit has an input (9) connected to the bus (6) and multiple outputs (10) for switching light sources (11) on and off, and
• each secondary control unit is configured for detecting a failure of communication in the bus (6) and setting each of its outputs (10) to a predefined value if the failure is detected,
**characterized in that**
• the first secondary control unit (4) is provided with a switch (12) placed into the bus (6) between the first section (7) and the second section (8) to communicatively connect the sections when closed and disconnect the sections when opened, wherein
• the switch (12) has a control terminal (13) connected to one output (10) of the first secondary control unit (4), and the predefined value which is set on this output (10) if the failure of communication in the bus (6) is detected corresponds to opening the switch (12).

2. The system according to claim 1 **wherein** the main control unit (3) is configured for detecting a failure of communication in the first section (7) of the bus (6), detecting reestablishment of communication in the first section (7) of the bus (6) after the switch (12) is open, and disconnecting the second lamp (2) from the bus (6) and/or from power after a predetermined number of failures and reestablishments of communication in the first section (7) of the bus (6).

3. The system according to any preceding claim **wherein** configuration for detecting a failure of communication in the bus (6) includes configuration for detecting that voltage remained in a predetermined range over a predetermined time period.

4. The system according to any preceding claim **wherein** the first lamp (1) and the second lamp (2) are moveable with respect to each other, wherein the bus (6) includes a cable connection (15) between the mutually movable lamps.

5. The system according to claim 4 **wherein** the first lamp (1) and the second lamp (2) form a two-part taillight, two-part headlight, two-part side lamp or two-part interior lamp.

6. A method for controlling communication between vehicle lamps by a system having a main control unit (3) and at least two secondary control units connected in parallel to a bus (6)**,** the method comprising the steps of:
• Carrying communication via the bus (6) between the main control unit (3) and the secondary control units;
• Controlling light sources (11) by outputs (10) of the secondary control units;
• Setting, by each secondary control unit, each of its outputs (10) to a predefined value if a failure of the communication in the bus (6) is detected;
the method **characterized in that** it further comprises the step of:
• Disconnecting the bus (6) between a first secondary control unit (4) and a second secondary control unit (5) by the first secondary control unit (4), wherein the first secondary control unit (4) disconnects the bus (6) by controlling a switch (12) provided in the bus (6) when one of the outputs (10) of the first secondary control unit (4) is set to the predefined value when the failure of the communication in the bus (6) is detected.

7. The method according to claim 6 **wherein** it further comprises the steps of:
• Detecting, by the main control unit (3), failures of the communication in the bus (6) and reestablishments of the communication in the bus (6) after the bus (6) is disconnected; and
• Disconnecting, by the main control unit (3), a lamp which comprises the second secondary control unit (5) from power and/or from the bus (6) after a predetermined number of failures and reestablishments of communication in the bus (6).

8. The method according to any one of claims 6 or 7 **wherein** the failure of communication in the bus (6) is detected if voltage in the bus (6) remains in a predetermined range over a predetermined time period.

9. The method according to any one of claims 6 or 7 **wherein** the failure of communication in the bus (6) is detected if messages comprised in the communication are considered undefined and/or unreadable by the main control unit (3) for a predetermined time period.

## Patentansprüche

1. System zur Steuerung von Fahrzeuglampen, umfassend
• eine erste Lampe (1) und eine zweite Lampe (2),
• ein Hauptsteuergerät (3) zur Steuerung des Leuchtens der ersten Lampe (1) und der zweiten Lampe (2) über sekundäre Steuergeräte,
• ein erstes sekundäres Steuergerät (4) für die erste Lampe (1) und ein zweites sekundäres Steuergerät (5) für die zweite Lampe (2),
• einen parallelen Kommunikationsbus (6) für die Kommunikation zwischen Steuergeräten innerhalb des Systems, wobei
• das Hauptsteuergerät (3) und die sekundären Steuergeräte parallel mit dem Bus (6) verbunden sind, wobei der Bus (6) zwei Abschnitte aufweist, wobei das Hauptsteuergerät (3) und das erste sekundäre Steuergerät (4) mit einem ersten Abschnitt (7) verbunden sind und das zweite sekundäre Steuergerät (5) mit einem zweiten Abschnitt (8) verbunden ist, wobei
• jedes sekundäre Steuergerät einen mit dem Bus (6) verbundenen Eingang (9) und mehrere Ausgänge (10) zum Ein- und Ausschalten von Lichtquellen (11) aufweist, und
• jedes sekundäre Steuergerät zum Erkennen eines Ausfalls der Kommunikation im Bus (6) und, wenn der Ausfall erkannt wird, Setzen jedes seiner Ausgänge (10) auf einen vordefinierten Wert konfiguriert ist,
**dadurch gekennzeichnet, dass**
• das erste sekundäre Steuergerät (4) mit einem zwischen dem ersten Abschnitt (7) und dem zweiten Abschnitt (8) in den Bus (6) eingesetzten Schalter (12) versehen ist, um in geschlossenem Zustand die Abschnitte kommunikativ zu verbinden und in geöffnetem Zustand die Abschnitte zu trennen, wobei
• der Schalter (12) einen mit einem Ausgang (10) des ersten sekundären Steuergeräts (4) verbundenen Steueranschluss (13) aufweist und der an diesem Ausgang (10) eingestellte vordefinierte Wert dann, wenn der Ausfall von Kommunikation in dem Bus (6) erkannt wird, dem Öffnen des Schalters (12) entspricht.

2. System nach Anspruch 1, **wobei** das Hauptsteuergerät (3) zum Erkennen eines Ausfalls der Kommunikation im ersten Abschnitt (7) des Busses (6), Erkennen der Wiederherstellung der Kommunikation im ersten Abschnitt (7) des Busses (6) nach dem Öffnen des Schalters (12) und Trennen der zweiten Lampe (2) vom Bus (6) und/oder vom Strom nach einer vorbestimmten Anzahl von Ausfällen und Wiederherstellungen der Kommunikation im ersten Abschnitt (7) des Busses (6) konfiguriert ist.

3. System nach einem der vorhergehenden Ansprüche, **wobei** die Konfiguration zum Erkennen eines Ausfalls der Kommunikation im Bus (6) die Konfiguration zum Erkennen, dass die Spannung über einen vorbestimmten Zeitraum in einem vorbestimmten Bereich blieb, umfasst.

4. System nach einem der vorhergehenden Ansprüche, **wobei** die erste Lampe (1) und die zweite Lampe (2) in Bezug zueinander bewegbar sind, wobei der Bus (6) eine Kabelverbindung (15) zwischen den wechselseitig bewegbaren Lampen umfasst.

5. System nach Anspruch 4, **wobei** die erste Lampe (1) und die zweite Lampe (2) eine zweiteilige Heckleuchte, einen zweiteiligen Scheinwerfer, eine zweiteilige Seitenleuchte oder eine zweiteilige Innenraumleuchte bilden.

6. Verfahren zur Steuerung der Kommunikation zwischen Fahrzeuglampen durch ein System, das ein Hauptsteuergerät (3) und mindestens zwei parallel mit einem Bus (6) verbundene sekundäre Steuergeräte aufweist, wobei das Verfahren folgende Schritte umfasst:
• Übertragen der Kommunikation über den Bus (6) zwischen dem Hauptsteuergerät (3) und den sekundären Steuergeräten;
• Steuerung von Lichtquellen (11) durch Ausgänge (10) der sekundären Steuergeräte;
• Einstellen, durch jedes sekundäre Steuergerät, jedes seiner Ausgänge (10) auf einen vordefinierten Wert, wenn ein Ausfall der Kommunikation im Bus (6) erkannt wird;
wobei das Verfahren **dadurch gekennzeichnet ist, dass** es ferner den folgenden Schritt umfasst:
• Trennen des Busses (6) zwischen einem ersten sekundären Steuergerät (4) und einem zweiten sekundären Steuergerät (5) durch das erste sekundäre Steuergerät (4), wobei das erste sekundäre Steuergerät (4) den Bus (6) durch Steuerung eines in dem Bus (6) bereitgestellten Schalters (12) trennt, wenn einer der Ausgänge (10) des ersten sekundären Steuergeräts (4) auf den vordefinierten Wert eingestellt ist, wenn der Ausfall der Kommunikation im Bus (6) erkannt wird.

7. Verfahren nach Anspruch 6, **wobei** es ferner die folgenden Schritte umfasst:
• Erkennen, durch das Hauptsteuergerät (3), von Ausfällen der Kommunikation im Bus (6) und Wiederherstellungen der Kommunikation im Bus (6), nachdem der Bus (6) getrennt ist; und
• Trennen, durch das Hauptsteuergerät (3), einer Lampe, die das zweite sekundäre Steuergerät (5) umfasst, vom Strom und/oder vom Bus (6) nach einer vorbestimmten Anzahl von Ausfällen und Wiederherstellungen der Kommunikation im Bus (6).

8. Verfahren nach einem der Ansprüche 6 oder 7, **wobei** der Ausfall der Kommunikation im Bus (6) erkannt wird, wenn die Spannung im Bus (6) über einen vorbestimmten Zeitraum in einem vorbestimmten Bereich bleibt.

9. Verfahren nach einem der Ansprüche 6 oder 7, **wobei** der Ausfall der Kommunikation im Bus (6) erkannt wird, wenn in der Kommunikation enthaltene Nachrichten für einen vorbestimmten Zeitraum vom Hauptsteuergerät (3) als undefiniert und/oder unlesbar erachtet werden.

## Revendications

1. Système de commande de lampes de véhicule, comprenant
• un première lampe (1) et une deuxième lampe (2),
• une unité de commande principale (3) destinée à commander l'allumage de la première lampe (1) et de la deuxième lampe (2) par l'intermédiaire d'unités de commande secondaires,
• une première unité de commande secondaire (4) pour la première lampe (1) et une deuxième unité de commande secondaire (5) pour la deuxième lampe (2),
• un bus de communication parallèle (6) pour la communication entre les unités de commande au sein du système, sachant que
• l'unité de commande principale (3) et les unités de commande secondaires sont connectées au bus (6) en parallèle, le bus (6) comportant deux sections, l'unité de commande principale (3) et la première unité de commande secondaire (4) étant connectées à une première section (7) et la deuxième unité de commande secondaire (5) étant connectée à une deuxième section (8), sachant que
• chaque unité de commande secondaire comporte une entrée (9) connectée au bus (6) et plusieurs sorties (10) pour allumer et éteindre des sources de lumière (11) et que
• chaque unité de commande secondaire est configurée pour détecter une défaillance de communication sur le bus (6) et pour régler chacune de ses sorties (10) sur une valeur prédéfinie si la défaillance est détectée,
**caractérisé en ce que**
• la première unité de commande secondaire (4) est équipée d'un commutateur (12) placé sur le bus (6) entre la première section (7) et la deuxième section (8) afin de relier ces sections entre elles du point de vue communication lorsqu'il est fermé et de les déconnecter lorsqu'il est ouvert,
• le commutateur (12) comportant une borne de commande (13) connectée à une sortie (10) de la première unité de commande secondaire (4) et la valeur prédéfinie réglée sur cette sortie (10) si une défaillance de communication dans le bus (6) est détectée correspondant à l'ouverture du commutateur (12).

2. Système selon la revendication 1, **sachant que** l'unité de commande principale (3) est configurée pour détecter une défaillance de communication dans la première section (7) du bus (6), détecter le rétablissement de la communication dans la première section (7) du bus (6) après l'ouverture du commutateur (12) et déconnecter le deuxième feu (2) du bus (6) et/ou de l'alimentation après un nombre prédéterminé de défaillances et de rétablissements de la communication dans la première section (7) du bus (6).

3. Système selon l'une des revendications précédentes **sachant que** la configuration permettant de détecter une défaillance de communication dans le bus (6) comprend une configuration permettant de détecter que la tension est restée dans une plage prédéterminée pendant une période de temps prédéterminée.

4. Système selon l'une des revendications précédentes **sachant que** la première lampe (1) et la deuxième lampe (2) sont mobiles l'une par rapport à l'autre, le bus (6) comprenant une connexion par câble (15) entre les lampes mutuellement mobiles.

5. Système selon la revendication 4 **sachant que** la première lampe (1) et la deuxième lampe (2) forment un feu arrière en deux parties, un feu avant en deux parties, un feu latéral en deux parties ou un feu intérieur en deux parties.

6. Procédé de commande de la communication entre les lampes d'un véhicule par un système comportant une unité de commande principale (3) et au moins deux unités de commande secondaires connectées en parallèle à un bus (6), le procédé comprenant les étapes suivantes :
• Effectuer la communication via le bus (6) entre l'unité de commande principale (3) et les unités de commande secondaires ;
• Commander les sources de lumière (11) via les sorties (10) des unités de commande secondaires ;
• Régler, au moyen des unités de commande secondaires, chacune de ses sorties (10) sur une valeur prédéfinie en cas de détection d'une défaillance de la communication sur le bus (6) ;
le procédé étant **caractérisé en ce qu'**il comprend en outre l'étape consistant à :
• Déconnecter le bus (6) entre une première unité de commande secondaire (4) et une deuxième unité de commande secondaire (5) via la première unité de commande secondaire (4), la première unité de commande secondaire (4) déconnectant le bus (6) en commandant un commutateur (12) du bus (6) lorsque l'une des sorties (10) de la première unité de commande secondaire (4) est réglée sur la valeur prédéfinie en cas de détection d'une défaillance de la communication dans le bus (6).

7. Procédé selon la revendication 6 **sachant qu**'il comprend en outre les étapes consistant à :
• Détecter, par l'unité de commande principale (3), les défaillances de communication sur le bus (6) et les rétablissements de la communication sur le bus (6) après déconnexion du bus (6) ; et
• Déconnecter, par l'unité de commande principale (3), une lampe comprenant la deuxième unité de commande secondaire (5) de l'alimentation électrique et/ou du bus (6) après un nombre prédéterminé de défaillances et de rétablissements de la communication sur le bus (6).

8. Procédé selon l'une des revendications 6 ou 7, **sachant que** la défaillance de communication sur le bus (6) est détectée si la tension du bus (6) reste dans une plage prédéterminée pendant une période de temps prédéterminée.

9. Procédé selon l'une des revendications 6 ou 7, **sachant que** la défaillance de communication sur le bus (6) est détectée si les messages compris dans la communication sont considérés comme indéfinis et/ou illisibles par l'unité de commande principale (3) pendant une période de temps prédéterminée.
